Europäisches Patentamt

European Patent Office

Office européen des brevets

(11) Publication number: **0 122 043**
**B1**

## EUROPEAN PATENT SPECIFICATION

(45) Date of publication of patent specification: **24.06.87**

(21) Application number: **84301580.1**

(22) Date of filing: **09.03.84**

(51) Int. Cl.⁴: **B 60 K 37/00, B 60 K 37/02, B 60 K 35/00, B 60 Q 9/00, B 60 Q 3/04**

(54) Driver's information display for motor vehicles.

(30) Priority: **05.04.83 GB 8309150**

(43) Date of publication of application:
**17.10.84 Bulletin 84/42**

(45) Publication of the grant of the patent:
**24.06.87 Bulletin 87/26**

(84) Designated Contracting States:
**DE FR IT**

(56) References cited:
**DE-A-3 046 079**
**FR-A-2 510 783**
**US-A-4 196 413**
**US-A-4 234 866**
**MACHINE DESIGN, vol. 52, no. 7, April 1980, p. 4, Cleveland, Ohio (US); "Animated talking dashboard shown"**
**ELECTRONIC TECHNOLOGIES AND SYSTEMS FOR COMMERCIAL VEHICLES OF THE 80s SP-505, November 1981, pp. 9-19, Warrendale (US); A.L.LOPEZ et al.: "Potential truck applications of electronic display information systems"**

(73) Proprietor: **Gaydon Technology Limited Gaydon Proving Ground Banbury Road Lighthorne Warwickshire CV35 OBL (GB)**

(72) Inventor: **Williams, Malcolm 38 Willow Road Solihull West Midlands (GB)**
Inventor: **Mackie, Carmichael 22 Moult House Lane Earlswood Solihull West Midlands (GB)**

(74) Representative: **Waters, Jeffrey ARG Patent Department Cowley Body Plant Cowley Oxford OX4 5NL (GB)**

Courier Press, Leamington Spa, England.

## Description

This invention relates to a driver's information display for a motor vehicle having means for producing one or more symbols to indicate certain information (US—A—4 196 413).

Modern displays carry not only primary information such as the speed of the vehicle, the mileage covered, the amount of fuel used, but also a certain amount of secondary information such as whether the headlamps are illuminated and, if so, whether they are on full beam or dipped, whether the heated rear window is illuminated and whether the rear fog lamp is on and so on. The secondary information is usually presented in the form of symbols. Typically the symbols are illuminated at the appropriate time.

However, an inexperienced driver of the motor vehicle does not always immediately know what any particular symbol means.

According to the invention electronic circuit means is provided, operable by a manual control device by the driver, to produce explanatory visual text concerning any displayed symbol.

This provides a simple means of immediately identifying any unknown symbol, and therefore enables the driver to give his undivided attention to the road.

The display may be arranged to distinguish between when the vehicle is in motion and when it is stationary and to produce more comprehensive explanation in the latter case.

For the avoidance of the doubt, the word "symbol" should be taken to include not only a schematic representation of a quantity (such as the symbol usually used to indicate a heated rear windscreen or a symbol representing fuel level), but also letters or numerals characteristic of some quantity, for example, the temperature outside the vehicle.

The invention will now be described by way of example with reference to the accompanying drawings, in which:

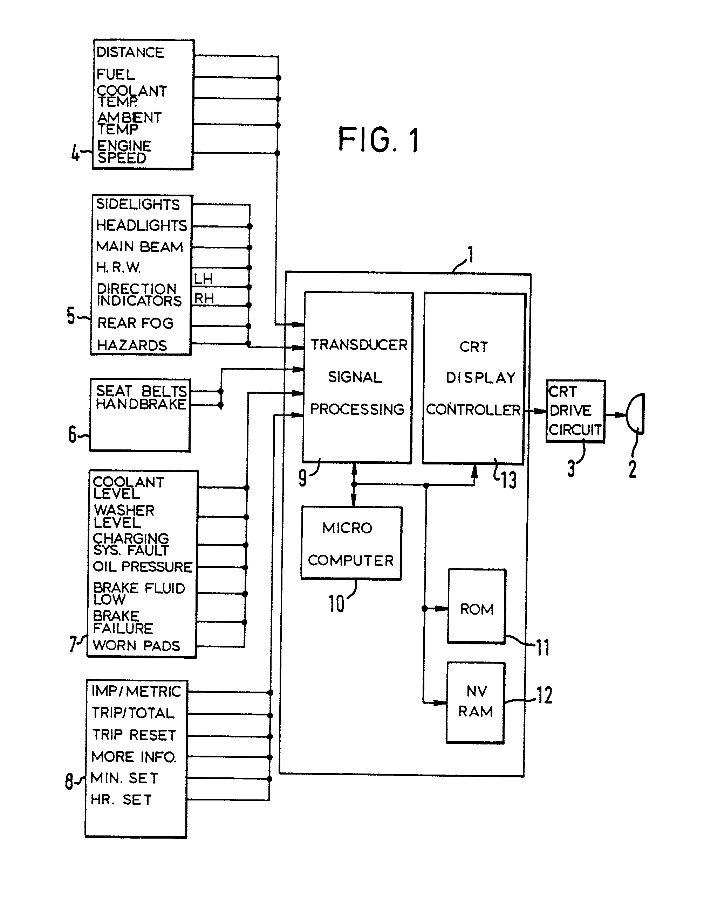

Figure 1 is a block diagram of the electronic circuit of the display;

Figure 2 shows the appearance of the display when the vehicle is in motion before the manual control has been operated;

Figure 3 shows the appearance of the display when the vehicle is in motion after the manual control has been operated;

Figure 4 shows the appearance of the display when the vehicle is stationary; and

Figure 5 shows the appearance of the display when the vehicle is stationary after the manual control has been operated.

Referring to the drawings an electronic control unit 1 drives a cathode ray tube 2 via an appropriate driving circuit 3. The electronic control unit 1 has five main sets of inputs, namely, a set of main transducers 4, a bank of main electrical loads 5, miscellaneous transducers 6, diagnostics transducers 7 and the actual display controls 8.

The main transducers 4 are for sensing distance, fuel, coolant temperature, ambient temperature and engine speed. The distance transducer is a standard trip computer interface driven from the speedometer cable which gives eight thousand electrical pulses per mile.

Road speed and distance travelled can be obtained from this. The fuel transducer is a standard fuel gauge sender unit which gives fuel level information in terms of electrical resistance. The coolant temperature transducer is a thermister located in the engine block. The ambient temperature transducer is a thermister mounted in the vehicle nose so as to read outside air temperature. The engine speed is sensed from the negative terminal of the ignition coil.

The bank of main electrical loads are sensed by wires leading to the electronic control unit from side lights, dipped headlights, main beam headlights, heated rear window, right hand and left hand direction indicators, rear fog lamps, and hazard warning lights.

Simple switch type transducers are incorporated in the seat belt mechanisms and the hand brake so that there operation may be sensed by means of the miscellaneous transducers 6.

Standard switch type transducers are incorporated to provide diagnostic sensing for the following system failures: coolant level low, screen wash level low, charging system fault, oil pressure low, brake fluid low, brake failure, and worn brake pads.

The display control 8 has a bank of six switches to provide various display control functions, namely, selection of imperial or metric units, trip or total odometer selection, trip odometer reset, minutes and hours set for clock function, and manual control button for providing explanatory information.

The signals from these transducers are converted to digital form in the transducer signal processing unit 9. This process is supervised by a micro-computer 10 and the resulting information is stored in ROM 11 and non-volatile RAM 12 in such a form as to be directly usable by CRT display control unit 13.

The quantitive information, such as speed, fuel level, coolant temperature etc is stored as digital numbers in appropriate memory locations. The on/off information is stored as an array of bits in successive memory locations. Non-volatile RAM is used to store the distance travelled.

The micro-computer 10 communicates with a standard cathode ray tube display controller 13 to produce the video signals necessary to cause CRT driving circuit 3 to drive the display.

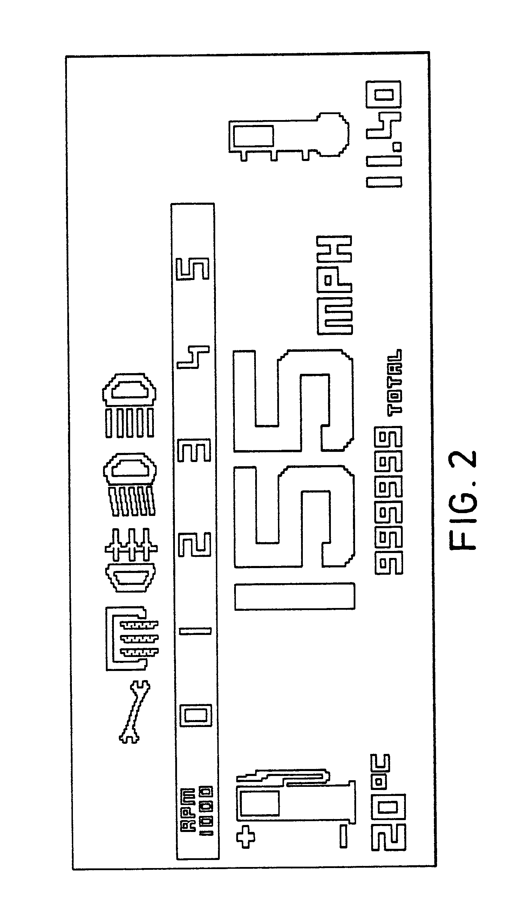

Referring to Figure 2, the display shows primary information such as the vehicle speed in the centre and beneath that the distance travelled, above that the revolutions of the engine in thousands of rpm, to the left the fuel tank level and below that the ambient temperature, to the right the engine temperature and below that the time.

All these primary pieces of information are illuminated on the cathode ray tube.

Above the band indicating revolutions per minute, are shown symbols which each illuminate when their particular function is operated. Obviously, all the symbols would not illuminate at the same time in use of the vehicle, only those for which the appropriate vehicle function is in operation.

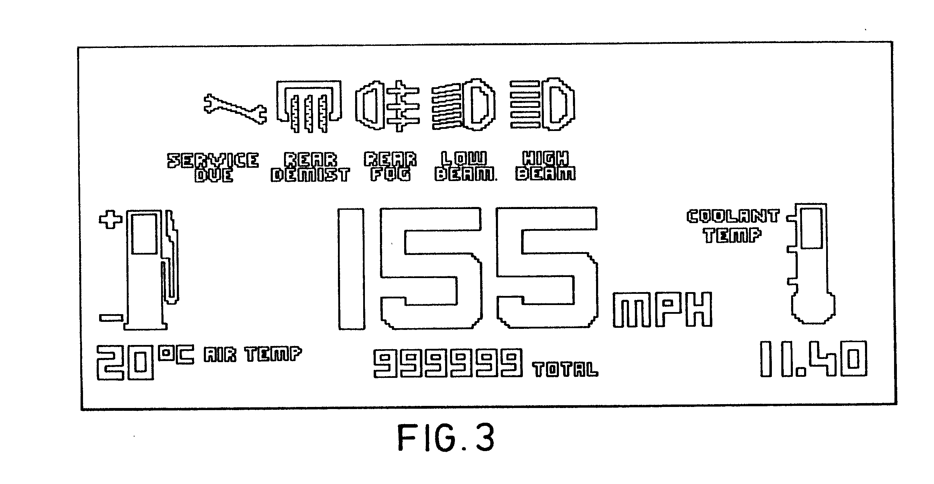

If an experienced driver is driving the vehicle and one of these secondary symbols is illuminated, the driver would press the manual control button to operate the switch in display control 8 and the additional text shown in Figure 3 would result for whatever symbol was illuminated. Thus, if the rear fog lamp symbol was illuminated, the words "rear fog" underneath the symbol would also be illuminated. Similarly for high beam, low beam, rear demist and service due.

Of course the invention is not limited to the particular symbols shown in Figures 2 and 3 thus, for example, other symbols which indicate warnings of various conditions could be displayed, for example a symbol indicating bulb failure. When the manual control button is depressed, the words "bulb failure" would be read from the display adjacent to the symbol.

If desired, the text could be arranged to be displayed for a certain period of time, for example, ten seconds, only, and then disappear.

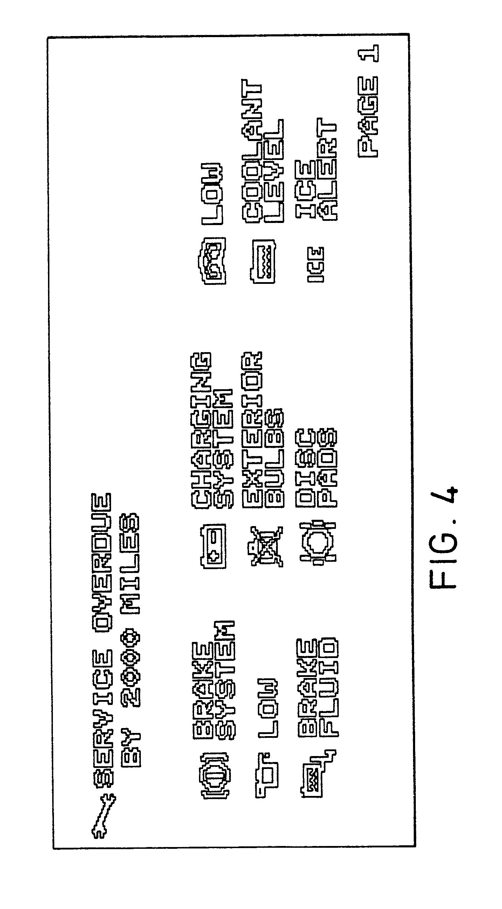

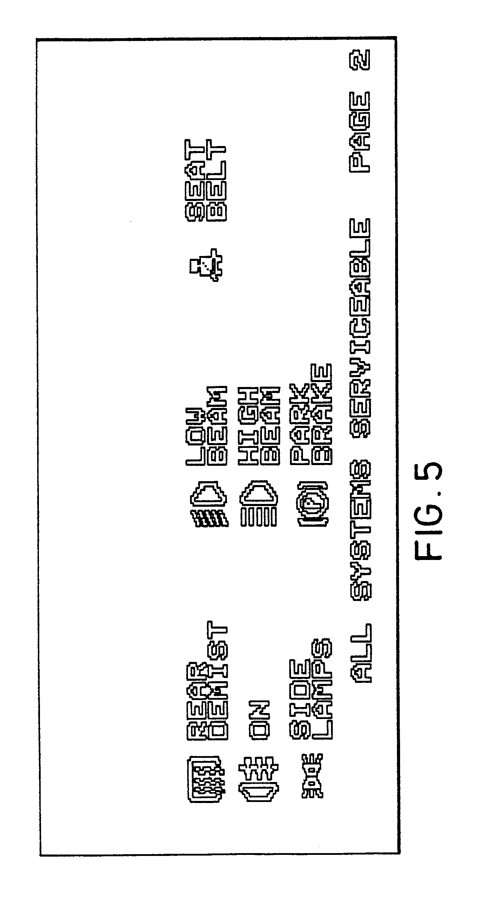

Referring to Figures 4 and 5, this shows the display when the vehicle is stationary and the engine is not turning over. When the ignition switch is turned sufficiently to operate electrical systems, but not sufficiently to turn the engine, a display of the general form shown in Figure 4 is produced. Operation of the manual control button produces the display shown in Figure 5. In the case of Figure 5 all systems, that is, rear demist, low beam, seat belt, light etc are working and the words "all systems serviceable" appear at the bottom of the page. In the case of Figure 4, these words do not appear because faults have been noted, namely the oil pressure is low and the windscreen washer is empty. What happens is that the oil can symbol and the word "low" flash on and off in alternation with the word "oil pressure". Similarly the windscreen washer symbol and the word "low" flashes on and off in alternation with the words "screen wash". Of course if desired further pages of information could be shown, the manual control button enabling the driver to page through them in a simple manner. This pre-start check enables the driver to check for faults, and also to familiarise himself with the symbols, which all appear with text.

As an alternative to the pre-start check described with reference to Figures 4 and 5, when the vehicle is stationary and the engine is not running, the act of turning the ignition switch to the position to switch on electrical systems could be arranged to cause any fault condition to be indicated in symbolic form, but again without the primary driver's information. The manual control could then be depressed to obtain textual information on the fault. This time, however, the information could be more detailed than when the vehicle was travelling.

## Claims

1. A driver's information display for a motor vehicle having means for producing one or more symbols to indicate certain information, characterised in that electronic circuit means is provided, operable by a manual control device by the driver, to produce explanatory visual text concerning any display symbol.

2. A display according to claim 1 characterised in that the explanatory text is more detailed if the vehicle is stationary and the engine is not running.

3. A display according to claim 1 or claim 2, characterised in that, if the vehicle is stationary and the engine is not running, the display produces a first page of information on the vehicle systems, and the manual control is operable to produce a second page of information on the vehicle systems.

## Patentansprüche

1. Fahrerinformation-Anzeigevorrichtung für ein Kraftfahrzeug, mit einer Einrichtung zum Erzeugen eines oder mehrerer Symbole zum Angeben gewisser Informationen, dadurch gekennzeichnet, daß eine elektronische Schaltungseinrichtung vorgesehen ist, die von dem Fahrer durch eine manuelle Steuervorrichtung betätigbar ist, um einen erläuternden, visuell dargestellten Text bezüglich irgendeines angezeigten Symbols zu erzeugen.

2. Anzeigevorrichtung nach Anspruch 1, dadurch gekennzeichnet, daß der erläuternde Text detaillierter ist, wenn das Fahrzeug steht und der Motor nicht läuft.

3. Anzeigevorrichtung nach Anspruch 1 oder Anspruch 2, dadurch gekennzeichnet, daß dann, wenn das Fahrzeug steht und der Motor nicht läuft, die Anzeigevorrichtung eine erste Seite mit Information über die Fahrzeugsysteme erzeugt und die manuelle Steuerung zur Erzeugung einer zweiten Seite mit Information über die Fahrzeugsysteme betätigbar ist.

## Revendications

1. Indicateur de pilotage pour conducteur pour véhicule à moteur comportant des moyens de production d'un ou plusieurs symboles pour fournir certaines informations, caractérisé en ce qu'il est prévu un circuit électronique, actionnable par un dispositif de commande manuelle par le conducteur, pour faire apparaître un texte visuel explicatif concernant tout symbole visualisé.

2. Indicateur selon la revendication 1, caractérisé en ce que le texte explicatif est plus détaillé si le véhicule est à l'arrêt et que le moteur n'est pas en marche.

3. Indicateur selon la revendication 1 ou la revendication 2, caractérisé en ce que si le véhicule est à l'arrêt et que le moteur n'est pas en marche, l'indicateur fournit une première page d'informations sur les équipements du véhicule, et en ce que le dispositif de commande manuelle est actionnable pour fournir une deuxième page d'informations sur les équipements du véhicule.

FIG. 1

DISTANCE
FUEL
COOLANT TEMP.
AMBIENT TEMP
ENGINE SPEED

4

SIDELIGHTS
HEADLIGHTS
MAIN BEAM
H. R. W.
DIRECTION INDICATORS — LH RH
REAR FOG
HAZARDS

5

SEAT BELTS
HANDBRAKE

6

COOLANT LEVEL
WASHER LEVEL
CHARGING SYS. FAULT
OIL PRESSURE
BRAKE FLUID LOW
BRAKE FAILURE
WORN PADS

7

IMP/METRIC
TRIP/TOTAL
TRIP RESET
MORE INFO.
MIN. SET
HR. SET

8

1

TRANSDUCER SIGNAL PROCESSING

9

CRT DISPLAY CONTROLLER

13

CRT DRIVE CIRCUIT

3

2

MICRO COMPUTER

10

ROM

11

NV RAM

12

FIG. 2

SERVICE DUE · REAR DEMIST · REAR FOG · LOW BEAM · HIGH BEAM

COOLANT TEMP

155 MPH

20 °C AIR TEMP

999999 TOTAL

11.40

FIG.3

SERVICE OVERDUE
BY 2000 MILES

BRAKE
SYSTEM

LOW

BRAKE
FLUID

CHARGING
SYSTEM

EXTERIOR
BULBS

DISC
PADS

LOW

COOLANT
LEVEL

ICE
ALERT

ICE

PAGE 1

FIG. 4

REAR DEMIST    LOW BEAM    SEAT BELT

ON            HIGH BEAM

SIDE LAMPS    PARK BRAKE

ALL SYSTEMS SERVICEABLE    PAGE 2

FIG.5

0 122 043